# EUROPÄISCHE PATENTSCHRIFT

(11) **EP 1 293 049 B1**
(45) Veröffentlichungstag und Bekanntmachung des Hinweises auf die Patenterteilung: **29.09.2004**
(21) Anmeldenummer: 01909764.1
(22) Anmeldetag: 16.02.2001
(51) Int. Cl.: H04B 3/23

(54) **SCHALTUNGSANORDNUNG ZUR ANALOGEN ECHOUNTERDRÜCKUNG**
CIRCUIT ARRANGEMENT FOR THE SUPPRESSION OF ANALOGUE ECHOES
ENSEMBLE CIRCUIT POUR LA SUPPRESSION ANALOGIQUE D'ECHOS

(30) Priorität: 20.06.2000 DE 10030123
(43) Veröffentlichungstag der Anmeldung: 19.03.2003
(73) Patentinhaber: Infineon Technologies AG, 81669 München (DE)
(72) Erfinder: BLON, Thomas, 86860 Jengen (DE); EICHLER, Thomas, 82008 Unterhaching (DE); GRÖPL, Martin, 81541 München (DE); LAASER, Peter, 81669 München (DE)
(74) Vertreter: Banzer, Hans-Jörg, Dipl.-Ing.
(86) Internationale Anmeldenummer: PCT/EP2001/001742
(87) Internationale Veröffentlichungsnummer: WO 2001/099302

(56) Entgegenhaltungen:
- WO-A-00/13335
- JP-A- 2001 007 739
- US-A- 4 591 670
- FINK D.G. & CHRISTIANSEN D.: "Electornics Engineers Handbook" 1989 , MCGRAW HILL , NEW YORK XP002171322 Abbildungen 3.3,3.4,3.42

## Beschreibung

Die vorliegende Erfindung betrifft eine Schaltunganordnung, welche zur analogen Echounterdrückung für das Empfangssignal einer über einen Übertrager an eine Übertragungsstrecke angeschlossene Kommunikationsvorrichtung vorgesehen ist.

Bei ISDN- und xDSL-Übertragungssystemen werden die Daten zwischen der Vermittlungsstelle und dem Teilnehmer über ein verdrilltes Leitungsadernpaar übertragen, wobei jede der beiden Leitungsadern gleichzeitig für beide Übertragungsrichtungen, d.h. für die Übertragungsrichtung von der Vermittlungsstelle zu dem Teilnehmer und für die Übertragungsrichtung von dem Teilnehmer zu der Vermittlungsstelle, vorgesehen ist. Das an den Leitungsadern anliegende Signal setzt sich somit aus einem Empfangssignalanteil und einem Sendesignalanteil zusammen. Um das auch als "Far End Signal" bezeichnete Empfangssignal auf der Teilnehmerseite zu gewinnen, muß das auch als "Near End Echo" bezeichnete Sende- oder Echosignal von dem Gesamtsignal subtrahiert werden. Dies kann zum einen durch eine digital realisierte adaptive Echodämpfung ("Echo Cancelling") geschehen. Zum anderen kann dies durch eine sogenannte Hybrid-Schaltung erfolgen, die gleichzeitig eine Zweidraht/Vierdraht-Umsetzung durchführt, um das Sende- und Empfangssignal zu trennen. Hybrid-Schaltungen werden beispielsweise in Telekommunikationsendgeräten verwendet. Mögliche Strukturen von bekannten Hybrid-Schaltungen sind beispielsweise in "Telephone Voice Transmission", Winston D. Gayler, Prentice Hall, 1989, beschrieben.

Die Echounterdrückung durch eine Hybrid-Schaltung besitzt zwei wesentliche Vorteile. Zum einen wird das Verhältnis zwischen dem Empfangssignal ("Far End Signal") zum Sendeoder Echosignal ("Near End Echo") um den Grad der Echounterdrückung, typischerweise um ca. 20 dB, angehoben. Dadurch sind weniger strenge Anforderungen an den Signal-Rausch-Abstand des für die Weiterverarbeitung des Empfangssignals vorgesehenen Analog/Digital-Wandlers erforderlich. Zum anderen ist in herkömmlichen ISDN- oder xDSL-Übertragungssystemen ein digitaler linearer Echokompensator dem Analogteil des Empfangssignalpfads nachgeschaltet. Dieser digitale lineare Echokompensator ist nicht in der Lage, nichtlineare Verzerrungen des Sendesignalpfades, die sich im Echo wiederfinden, zu kompensieren. Daher muß das Verhältnis zwischen den nichtlinearen Verzerrungen zum eigentlichen Signalanteil im Empfangssignalpfad sehr niedrig gehalten werden. Die Echounterdrückung einer Hybrid-Schaltung kann dies unterstützen, da der Anteil des Sendesignals im Empfangssignal und somit die nichtlinearen Verzerrungen reduziert werden.

Das hauptsächliche technische Problem, welches sich bei Hybrid-Schaltungen stellt, ist die genaue Nachbildung des Sendesignals bezogen auf diejenige Stelle im Übertragungssystem, an der die Subtraktion des nachgebildeten Sendesignals vom Gesamtsignal durchgeführt werden soll. Die an einem bestimmten Punkt des Übertragungssystems auftretende Sendespannung hängt wesentlich von der an diesem Punkt gültigen Impedanz der Übertragungsleitung sowie des zur Übertragung vorgesehenen Übertragers ab. Diese Impedanz ist stark veränderlich, da in der Anwendung Leitungen unterschiedlichen Materials, unterschiedlicher Länge und mit oder ohne sogenannte Bridge Taps verwendet werden. Mit dem Begriff "Bridge Tap" werden an die Leitungsadern der Übertragungsleitung angeschlossene Stichleitungen bezeichnet, die für den Anschluß weiterer Teilnehmer vorgesehen sind, jedoch nicht mit einem passenden Wellenwiderstand abgeschlossen sind und daher Reflexionen hervorrufen können. Es stellt sich also das Problem, die Impedanz der Übertragungsleitung und des Übertragers für alle Anwendungsfälle möglichst gut nachzubilden. Für den Fall eines SDSL-Übertragungssystems ("Symmetric Digital Subscriber Line") muß diese Impedanznachbildung in dem Frequenzbereich von 0 bis 400 kHz optimiert sein.

Eine weitere systembedingte Anforderung an die Hybrid-Schaltung in einem SDSL-Übertragungssystem ist ein Signal-Rausch-Abstand von mindestens 90 dB. Des weiteren soll die Verlustleistung der Hybrid-Schaltung möglichst gering sein.

Aus dem Stand der Technik sind verschiedene Schaltungsanordnungen zur analogen Echounterdrückung bekannt.

So wird beispielsweise in "A CMOS Analog Front-End IC for DMT ADSL", C. Conroy et al., 1999 IEEE International Solid-State Circuits Conference, ISSCC 99, Session 14, Paper TP 14.2, vorgeschlagen, zwei identische Sendesignalpfade zu implementieren, wobei der erste Sendesignalpfad für das primäre Sendesignal und der zweite Sendesignalpfad zur Nachbildung der Echospannung verwendet wird, um diese anschließend Systemen mit analoger Echounterdrückung zuführen zu können.

Eine weitere Echounterdrückung nach dem Stand der Technik ist aus WO-A-00 13335 bekannt.

In "An Integrated Adaptive Analog Balancing Hybrid for Use in (A)DSL Modems", F. Pécourt et al., 1999 IEEE International Solid-State Circuits Conference, ISSCC 99, Session 14, Paper TP 14.8, wird vorgeschlagen, das am jeweils interessierenden Punkt der Übertragungsleitung auftretende Sendesignal dadurch nachzubilden, daß das von dem Leitungstreiber der jeweiligen Kommunikationsvorrichtung erzeugte Sendesignal mit Hilfe eines integrierten aktiven Filters gefiltert wird. Das Filter erzeugt eine Nachbildung des im Empfangssignalpfad auftretenden Echos, so daß durch eine anschließende Subtraktion des Ausgangssignals des Filters von dem Empfangssignal der entsprechenden Hybrid-Schaltung eine Echounterdrückung für das Empfangssignal erzielt werden kann.

Schließlich ist aus "A 25kft 768Kb/s CMOS Transceiver for Multiple Bit-Rate DSL", M. Moyal et al., 1999 IEEE International Solid-State Circuits Conference, ISSCC 99, Session 14, Paper TP 14.4 eine gattungsgemäße Schaltungsanordnung zur analogen Echounterdrückung bekannt. In dieser Druckschrift wird eine Hybrid-Schaltung vorgeschlagen, bei der die Übertragungsstrecke durch ein skaliertes Impedanzmodell, eine sogenannte Replika, nachgebildet wird. Teile dieser Replika sind chipextern aufgebaut. Des weiteren wird in dieser Druckschrift vorgeschlagen, die Haupt- und Streuinduktivität des Übertragers chipintern durch skalierte Induktivitäten nachzubilden, wobei diese Induktivitäten durch sogenannte Gyratoren realisiert sind. Unter Gyratoren werden allgemein aktive Schaltungen mit beispielsweise Operationsverstärkern und Kondensatoren verstanden, die ohne Verwendung einer Induktivität diese simulieren. Bridge Taps werden durch ein chipinternes RLC-Netzwerk ("Replika") nachgebildet, wobei auch in diesem Fall die Induktivität durch eine Gyrator-Schaltung realisiert ist.

Die zuvor beschriebenen Lösungen zur Nachbildung des Sendesignals, bezogen auf diejenige Stelle des Übertragungssystems, an der die Subtraktion vom Empfangssignal durchgeführt werden soll, weisen verschiedene Nachteile auf. Bei der oben beschriebenen ersten Lösung ist ein erheblicher schaltungstechnischer Aufwand erforderlich, da der gesamte Sendesignalpfad zweimal realisiert werden muß. Eine Fehlanpassung ("Mismatch") zwischen den beiden Sendesignalpfaden hat eine unzureichende Echounterdrückung zur Folge. Bei der zuvor beschriebenen zweiten Lösung ist das zur Filterung des Sendesignals vorgesehene aktive Filter über den gesamten Frequenzbereich aktiv. Es ist ein erheblicher Stromverbrauch erforderlich, um das Rauschen in einem vertretbaren Rahmen zu halten. Bei der zuvor beschriebenen dritten Lösung sind hingegen die Gyratoren über den gesamten Frequenzbereich aktiv. Auch hier ist ein sehr hoher Stromverbrauch erforderlich, um das Rauschen in einem vertretbaren Rahmen zu halten.

Der vorliegenden Erfindung liegt daher die Aufgabe zugrunde, eine Schaltungsanordnung zur analogen Echounterdrückung, insbesondere zur Kombination mit einer Hybrid-Schaltung, vorzuschlagen, bei der die zuvor beschriebenen Nachteile nicht auftreten und eine zufriedenstellende analoge Echounterdrückung mit geringem Aufwand erzielt werden kann.

Diese Aufgabe wird erfindungsgemäß durch eine Schaltungsanordnung mit den Merkmalen des Anspruches 1 gelöst. Die Unteransprüche definieren jeweils bevorzugte und vorteilhafte Ausführungsformen der vorliegenden Erfindung.

Die erfindungsgemäße Schaltungsanordnung umfaßt erste Schaltungsmittel zur Nachbildung des Verhaltens der Übertragungsstrecke, wobei diese ersten Schaltungsmittel insbesondere durch ein passives RC-Netzwerk realisiert sein können. Des weiteren umfaßt die erfindungsgemäße Schaltungsanordnung zweite Schaltungsmittel zur Nachbildung des Verhaltens des Übertragers, wobei diese zweiten Schaltungsmittel einen oder mehrere Tiefpässe beliebiger Ordnung umfassen, denen als Eingangssignal direkt das von der Kommunikationsvorrichtung übertragene Sendesignal, d.h. das Ausgangssignal des entsprechenden Leitungstreibers, oder ein entsprechendes Signal der ersten Schaltungsmittel zugeführt sind. Darüber hinaus erfaßt die erfindungsgemäße Schaltungsanordnung dritte Schaltungsmittel, die insbesondere in Form eines Addierers ausgestaltet sein können, um ein an dem Übertrager abgegriffenes Signal (Gesamtsignal), welches sich aus einem Empfangssignalanteil und einem Sendesignalanteil zusammensetzt, durch ein Signal der ersten Schaltungsmittel und ein Signal der zweiten Schaltungsmittel zu korrigieren und somit das Empfangssignal mit unterdrücktem Echo zu erhalten.

Das Verhalten von eventuell vorgesehenen Bridge Taps der Übertragungsstrecke kann durch einen Bandpaß oder mehrere parallel geschaltete Bandpässe nachgebildet werden, denen als Eingangssignal entweder direkt das Sendesignal oder ein entsprechendes Signal der ersten Schaltungsmittel zugeführt wird. Die Bandpässe sind wie die Tiefpässe ausgangsseitig mit dem Addierer verbunden.

Besonders vorteilhaft ist, wenn zur Nachbildung des Verhaltens des Übertragers zwei parallel geschaltete Tiefpässe verwendet werden, wobei der eine Tiefpaß ein Tiefpaß erster Ordnung und der andere Tiefpaß ein Tiefpaß zweiter Ordnung ist. Alle dem Addierer zugeführten Spannungen oder Signale, d.h. insbesondere die Ausgangssignale der Tiefund Bandpässe, können mit entsprechenden Faktoren, d.h. mit entsprechenden positiven oder negativen reellen Zahlen, gewichtet werden, wobei insbesondere bei Verwendung von zwei parallel geschalteten Tiefpässen die Nachbildung des Verhaltens des Übertragers vorteilhaft ist, wenn für die Gewichtungsfaktoren c1 und c2 der beiden Tiefpässe die folgende Beziehung gilt: c2 = 1 - c1.

Um die erfindungsgemäße Schaltungsanordnung jeweils adaptiv an die jeweils verwendete Übertragungsstrecke anzupassen, sind nicht nur die Gewichtungsfaktoren vorteilhafterweise variabel ausgestaltet, sondern es können unmittelbar Betriebsparameter der Tief- und Bandpässe, wie beispielsweise die Grenzfrequenzen der Tief- und Bandpässe und die Güte der Bandpässe, adaptiv an die Übertragungsstrecke angepaßt werden.

Beim Aufbau der Kommunikation über die Übertragungsstrecke werden die optimalen Parameter der Tief- und Bandpässe adaptiv durch den Digitalteil des jeweils verwendeten Chips bestimmt. Eine vorteilhafte Realisierung der Schaltung ist, die einstellbaren Tief- und Bandpässe sowie den Addierer innerhalb einer integrierten Schaltung zu realisieren, jedoch die ersten Schaltungsmittel, d.h. die Replika, zur Nachbildung des Verhaltens der Übertragungsstrecke, extern aufzubauen. Dies hat verschiedene Vorteile. Zum einen können die Tief- und Bandpässe durch einen ebenfalls integrierten Digitalteil adaptiv auf die Übertragungsstrecke eingestellt werden, ohne daß Pins für die Steuersignale benötigt werden. Zum anderen lassen sich die Tief- und Bandpässe sowie der Addierer gut durch integrierte Operationsverstärkerschaltungen realisieren. Des weiteren müssen die Widerstände der Replika der Übertragungsstrecke möglichst gering gewählt werden, um das Rauschen zu minimieren. Dies macht relativ große Kapazitäten erforderlich, deren Integration unwirtschaftlich wäre. Ein weiterer Grund für eine relativ niederohmige Replika der Übertragungsstrecke ist die Tatsache, daß diese Replika durch die Eingänge der Tief- und Bandpässe belastet wird. Schließlich würde eine extern aufgebaute Replika der Übertragungsstrecke auch dem Kunden ermöglichen, die für seinen Anwendungsfall jeweils optimale Beschaltung zu wählen.

Ein wesentlicher Vorteil der vorliegenden Erfindung besteht darin, daß die Nachbildung des Echos bezogen auf diejenige Stelle im Übertragungssystem, an der die Subtraktion vom Gesamtsignal durchgeführt werden soll, soweit wie möglich mit passiven Elementen durchgeführt wird. Diese sind hochlinear und rauscharm. Die Tief- und Bandpässe sind jeweils nur in einem kleinen Frequenzbereich wirksam und beeinflussen die Linearität und das Rauschen somit nur minimal. Gegenüber der eingangs beschriebenen ersten bekannten Lösung gemäß dem Stand der Technik weist die erfindungsgemäße Schaltungsanordnung einen deutlich geringeren schaltungstechnischen Aufwand auf, da nicht der gesamte Sëndesignalpfad ein zweites Mal realisiert werden muß. Die Nachbildung des Echosignals wird aus dem wirklichen Sendesignal abgeleitet, so daß eine Fehlanpassung zwischen den zwei Sendesignalarten keine Rolle spielen würde. Da die erfindungsgemäß vorgesehenen Tief- und Bandpässe jeweils nur in einem kleinen Frequenzbereich wirksam sind, kann gegenüber den zuvor beschriebenen zweiten und dritten bekannten Lösungen des Stands der Technik ein deutlich geringerer Stromverbrauch erzielt werden.

Insbesondere bei der Verwendung von Leitungstreibern, welche auf dem Prinzip einer Stromquelle basieren, sogenannte "Current-Mode"-Leitungstreiber, wird erfindungsgemäß vorteilhafterweise eine Replika des Leitungstreibers eingesetzt, wobei das Ausgangssignal dieser Replika des Leitungstreibers bzw. ein zwischen der Replika des Leitungstreibers und der Replika der Übertragungsstrecke abgegriffenes Signal dem mindestens einen Tiefpaß als Eingangssignal zugeführt wird. Auf diese Weise kann auch bei Verwendung eines "Current-Mode"-Leitungstreibers eine verbesserte Echodämpfung durch die Hybrid-Schaltung erzielt werden, so dass sich die Anforderungen an den nachfolgenden Analog/Digital-Wandler verringern.

Die vorliegende Erfindung eignet sich insbesondere zur analogen Echounterdrückung in Kombination mit einer Hybrid-Schaltung, wie sie in Kommunikationsvorrichtungen für ISDNund xDSL-Übertragungssystemen, insbesondere SDSL-Übertragungssystemen, oder Gigabit Ethernet-Übertragungssystemen etc., eingesetzt wird.

Die Erfindung wird nachfolgend anhand bevorzugter Ausführungsbeispiele unter Bezugnahme auf die beigefügte Zeichnung näher erläutert.
Figur 1 zeigt den Aufbau einer Schaltungsanordnung zur analogen Echounterdrückung gemäß einem ersten Ausführungsbeispiel der vorliegenden Erfindung,
Figur 2 zeigt den Aufbau einer Schaltungsanordnung zur analogen Echounterdrückung gemäß einem zweiten Ausführungsbeispiel der vorliegenden Erfindung, und
Figur 3 zeigt den Aufbau einer Schaltungsanordnung zur analogen Echounterdrückung gemäß einem dritten Ausführungsbeispiel der vorliegenden Erfindung.

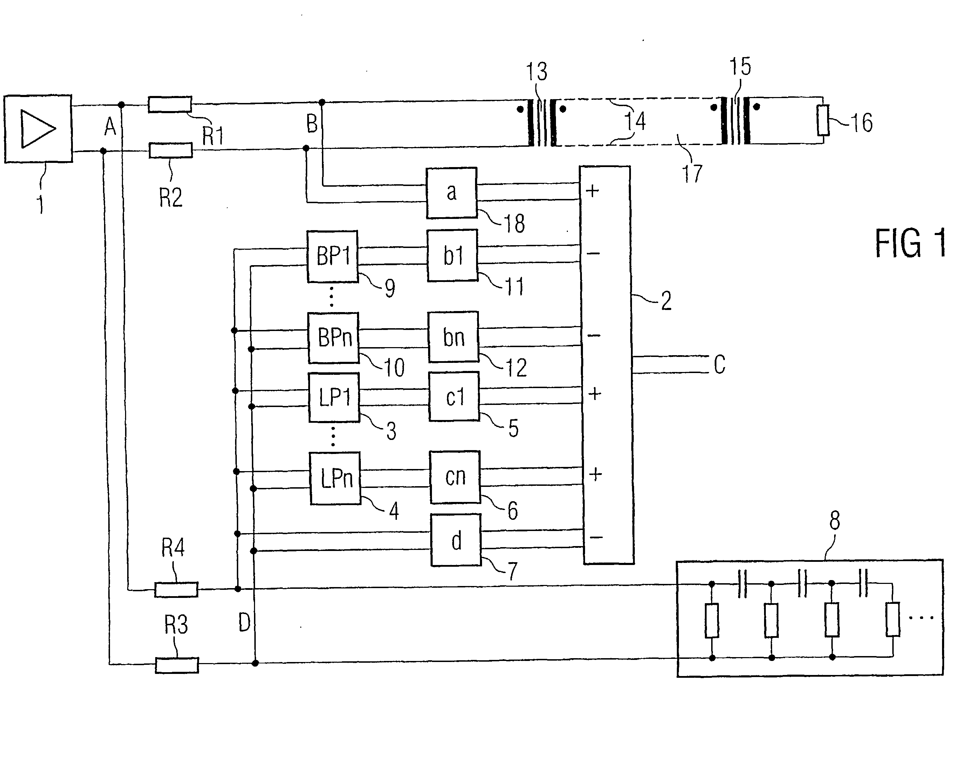

In Figur 1 ist eine Hybrid-Schaltung einer an eine Übertragungsstrecke 17, beispielsweise eine SDSL-Übertragungsstrecke, angeschlossenen Kommunikationsvorrichtung dargestellt. Wie an sich üblich ist, weist die Kommunikationsvorrichtung einen Leitungstreiber 1 auf, der über Vorwiderstände R1 und R2 mit einem Übertrager 13 verbunden ist. Der Übertrager 13 stellt den Beginn der Übertragungsstrecke 17 dar. An die Übertragungsstrecke 17 sind Stichleitungen bzw. Bridge Taps 14 angeschlossen. Auf der Empfängerseite ist ebenfalls ein Übertrager 15 vorgesehen, der eingangsseitig an die Übertragungsstrecke 17 angeschlossen ist und ausgangsseitig mit einem Abschlußwiderstand 16 abgeschlossen ist.

Wie aus Figur 1 ersichtlich ist, liegt an dem in Figur 1 gezeigten Schaltungspunkt A die dem reinen Sendesignal entsprechende Ausgangsspannung des Leitungstreibers 1 an, während an dem ebenfalls in Figur 1 gezeigten Leitungspunkt B die Summe aus dem über die Übertragungsstrecke 17 empfangenen Empfangssignal und dem über die Übertragungsstrecke 17 zu sendenden Sendesignal anliegt. Um das reine Empfangssignal zu gewinnen, muß somit der Sendesignalanteil, d.h. das Echo, von der am Schaltungspunkt B anliegenden Spannung bzw. dem Gesamtsignal subtrahiert werden. Zu diesem Zweck wird auf nachfolgend beschriebene Art und Weise eine Spannung erzeugt, die möglichst genau der Echospannung am Punkt B entspricht.

An den Punkt A ist eine Schaltung ("Replika") des Sendesignalpfads angeschlossen, welche das Verhalten des Sendesignalpfads nachbildet. Diese Replika umfaßt Widerstände R3 und R4, welche eine Replika der Widerstände R1 und R2 darstellen, sowie ein RC-Netzwerk 8, welches eine Replika der Übertragungsstrecke 17 darstellt. Das RC-Netzwerk wird so dimensioniert, daß die Eingangsimpedanz am Punkt B der Eingangsimpedanz einer typischen langen Übertragungsstrecke ohne Bridge Taps entspricht. Die am Punkt D auftretende Spannung entspricht in erster Näherung der am Punkt B anliegenden Echospannung.

Um an einem Schaltungspunkt C das Empfangssignal mit einem stark reduzierten Echoanteil zu halten, wird die am Punkt B anliegende Spannung einem Addierer 2 zugeführt, welcher davon die am Punkt D anliegende Spannung subtrahiert, wobei beide Spannungen durch Einrichtungen 7 bzw. 18 mit Faktoren d bzw. a gewichtet werden können. Bei dieser Vorgehensweise ist jedoch das Verhalten des Übertragers 13 und der Bridge Taps 14 noch nicht berücksichtigt.

Der Übertrager 13 stellt mit seiner Haupt- und Streuinduktivität einen Bandpaß dar, dessen Nullstelle durch die Hauptinduktivität und dessen Polstelle durch die Streuinduktivität bestimmt wird. Die Nachbildung der Hauptinduktivität ist somit durch einen Hochpaß möglich, wobei das Verhalten eines Hochpasses demjenigen eines invertierten Tiefpasses entspricht. Um bei der in Figur 1 gezeigten Schaltungsanordnung das Verhalten des Übertragers 13 zu berücksichtigen, ist ein Tiefpaß 3 (LP1) vorgesehen, dem als Eingangsspannung die am Punkt D anliegende Spannung zugeführt ist, wobei das Ausgangssignal des Tiefpasses 3 dem Addierer 2 zugeführt ist. Der Addierer 2 subtrahiert von der Spannung am Punkt D die Ausgangsspannung des Tiefpasses 3, so daß nur die daraus resultierende Differenzspannung von der am Punkt B anliegenden Spannung subtrahiert wird. Die Schaltung kann weiter dadurch verbessert werden, daß zu dem Tiefpaß 3 mindestens ein weiterer Tiefpaß 4 (LPn) parallel geschaltet wird, dessen Ausgangsspannung ebenfalls von dem Addierer 2 von der Spannung am Punkt D subtrahiert wird. Die Ausgänge der Tiefpässe 3-4 sind vorzugsweise mit Hilfe von Einrichtungen 5-6 mit Faktoren c1-cn gewichtet. Ebenso sind die Grenz- oder Knickfrequenzen der Tiefpässe 3, 4 vorzugsweise einstellbar, so daß die Schaltung an verschiedene Übertragertypen angepaßt werden kann.

An die Übertragungsstrecke 17 angeschlossene Bridge Taps 14 bewirken im Impedanzverlauf über die Frequenz am Punkt B lokale Minima und Maxima, die davon abhängen, wie weit das offene Leitungsende vom Eingang in der Relation zur Wellenlänge entfernt ist ([2·n + 1] · λ/4 = Minima, [n + 1] ·λ/2, = Maxima, n = 0...∞). Die Bridge Taps 14 können somit durch die additive Überlagerung der Frequenzgänge von Bandpaßfiltern mit dem Signal am Punkt D nachgebildet werden. Bei der in Figur 1 gezeigten Schaltungsanordnung sind daher Bandpässe 9, 10 vorgesehen, denen als Eingangsspannung die am Punkt D anliegende Spannung zugeführt wird. Die Ausgangsspannungen der Bandpässe 9, 10 sind wiederum dem Addierer 2 zugeführt, der diese Ausgangsspannungen von der am Punkt B abgegriffenen Spannung subtrahiert. Die Schaltungsanordnung kann weiter verbessert werden, wenn die Ausgangsspannungen der Bandpässe 9-10 durch entsprechende Einrichtungen 11-12 mit Faktoren b1-bn gewichtet werden. Die Bandpässe 9, 10 sind vorzugsweise in ihrer Güte, Grenz- bzw. Knickfrequenz und Verstärkung einstellbar, um sie an die jeweiligen Leitungen anpassen zu können.

Bei der in Figur 1 gezeigten Schaltungsanordnung entspricht die Eingangsspannung der Tief- und Bandpässe jeweils der am Punkt D abgegriffenen Spannung, welche der Sendespannung des Leitungstreibers 1, d.h. der am Punkt A anliegenden Spannung, nachgebildet ist. Selbstverständlich kann den Tief- und Bandpässen als Eingangsspannung auch direkt die Sendespannung des Leitungstreibers 1, d.h. die am Punkt A anliegende Spannung, zugeführt sein, wobei die Tief- und Bandpässe nicht das gleiche Eingangssignal haben müssen.

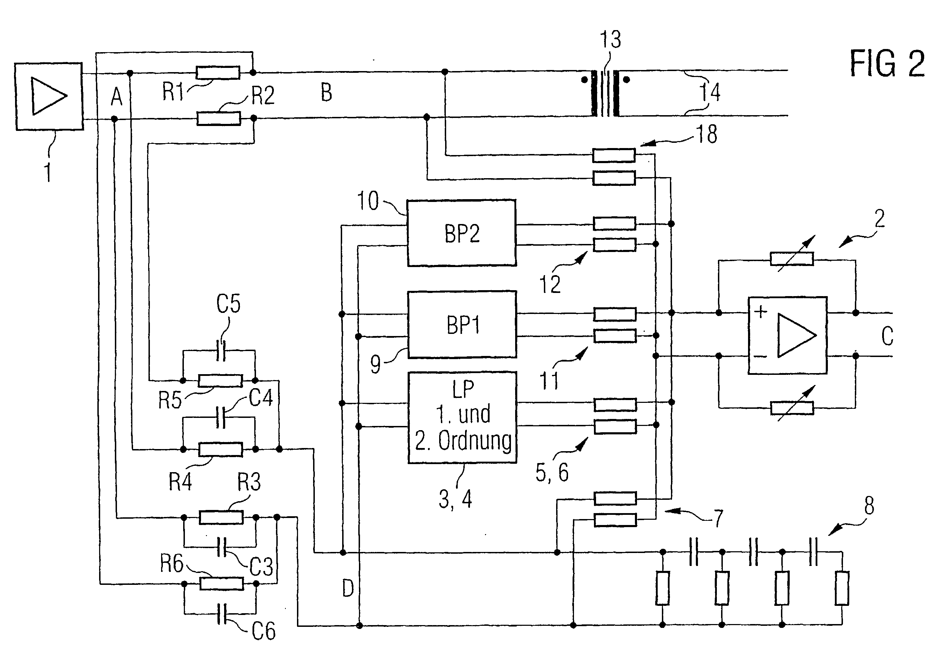

In Figur 2 ist eine Hybrid-Schaltung gemäß einem zweiten Ausführungsbeispiel der vorliegenden Erfindung dargestellt, wobei die den in Figur 1 gezeigten Komponenten entsprechenden Bauteile mit denselben Bezugszeichen versehen sind.

Wie aus Figur 2 ersichtlich ist, wird das Sendesignal nicht nur am Punkt A, sondern auch am Punkt B abgegriffen. Die Replika 8 der Übertragungsstrecke ist somit über Widerstände R3 und R4 bzw. R5 und R6 sowohl an den Punkt A als auch an den Punkt B angeschlossen. Diese Schaltungsanordnung eignet sich insbesondere für die Verwendung einer sogenannten "Synthesized Impedance", um das reine Sendesignal in die Replika einzuspeisen. Vom Übertrager 13 aus zu dem Leitungstreiber 1 betrachtet, ist die Eingangsimpedanz durch die Serienschaltung der Vorwiderstände R1 und R2 multipliziert mit dem Übertragungsverhältnis des Übertragers 13 definiert. Eine Verkleinerung der Widerstände R1 und R2 kann aktiv durch den Leitungstreiber 1 nachgebildet werden, indem seine Ausgangsspannung kontinuierlich gemessen wird, um einen entsprechenden Strom einzuprägen. Diese Vorgehensweise wird als "Synthesized Impedance" bezeichnet und hat einen verbesserten Wirkungsgrad zur Folge.

Allgemein kann der Einfluß der Streuinduktivität des Übertragers 13 durch eine Parallelschaltung von Kapazitäten zu denjenigen Widerständen, welche die Vorwiderstände R1 und R2 nachbilden, und/oder durch eine entsprechende Dimensionierung der Replika 8 der Übertragungsstrecke nachgebildet werden. Bei der in Figur 2 gezeigten Schaltungsanordnung sind aus diesem Grund Kapazitäten C3-C6 parallel zu den Widerständen R3-R6 geschaltet, um den Einfluß der Streuinduktivität des Übertragers 13 nachzubilden.

Vorzugsweise wird zur Nachbildung der Hauptinduktivität des Übertragers 13 die Parallelschaltung von zwei Tiefpässen verwendet, wobei der eine Tiefpaß ein Tiefpaß erster Ordnung und der andere Tiefpaß ein Tiefpaß zweiter Ordnung ist. Die Ausgangsspannungen der beiden Tiefpässe werden mit Faktoren c1 bzw. c2 gewichtet, wobei vorzugsweise das Verhältnis gilt: c2 = 1 - c1.

Bei der in Figur 2 gezeigten Schaltung sind die in Figur 1 dargestellten Gewichtungseinrichtungen 5-7, 11, 12 und 18 durch entsprechende Widerstandsschaltungen realisiert. Der Addierer 2 ist in Form einer Verstärkerschaltung mit variablen Rückkopplungswiderständen realisiert.

Eine Vereinfachung der Schaltung ergibt sich bei Verwendung eines Übertragers 13 mit einer sogenannten "Sense Winding". Dabei handelt es sich um eine zusätzliche Windung, welche der Übertrager 13 auf der dem Leitungstreiber 1 zugewandten Seite aufweist. In diesem Fall muß die Streuinduktivität des Übertragers 13 nicht berücksichtigt werden, wobei das Gesamtsignal nicht am Punkt B, sondern direkt an der "Sense Winding" des Übertragers 13 abgegriffen wird.

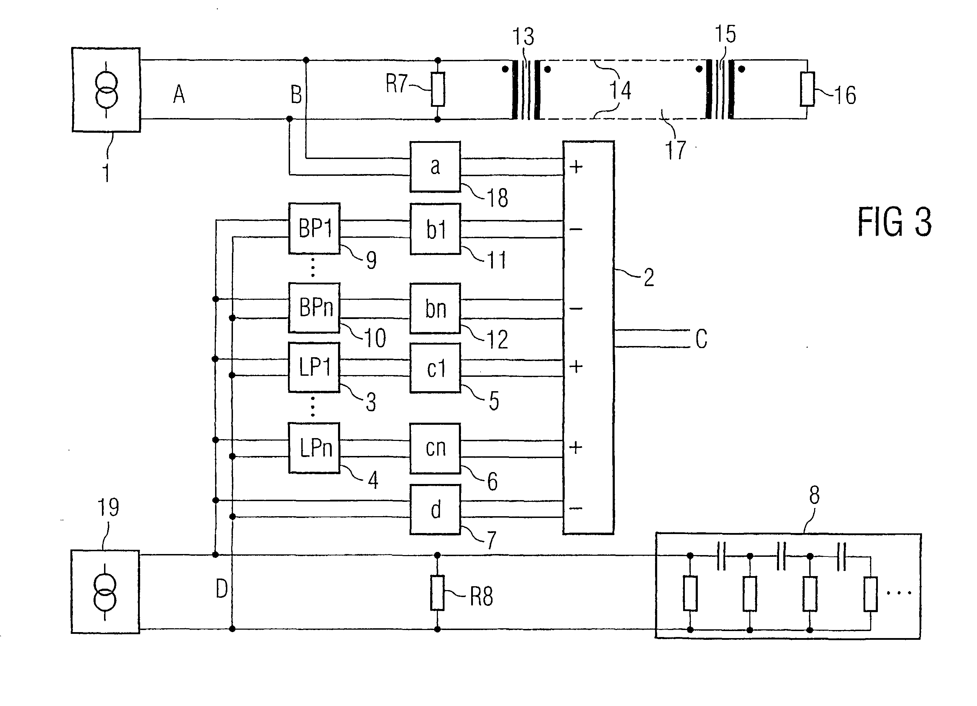

Bei drahtgebundenen Kommunikationssystemen hoher Datenrate, z.B. dem Kommunikationssystem Gigabit Ethernet 1000Base-T, wird anstelle eines als Spannungsquelle arbeitenden Leitungstreibers häufig ein sogenannter "Current-Mode"-Leitungstreiber, d.h. ein als Stromquelle arbeitender Leitungstreiber, eingesetzt. In diesem Fall empfiehlt es sich, die in Fig. 1 und Fig. 2 gezeigten Ausführungsbeispiele wie in Fig. 3 gezeigt abzuwandeln.

Wie in Fig. 3 gezeigt ist, wird eine Replika 19 des "Current-Mode"-Leitungstreibers 1 verwendet. Der Leitungstreiber 1 ist mit dem Übertrager 13, der den Beginn der Übertragungsstrecke 17 darstellt, verbunden. Parallel zu dem Übertrager 13 ist ein Widerstand R7 geschaltet, der als Leitungsabschlusswiderstand wirkt. Dieser Leitungsabschlusswiederstand R7 kann eventuell auch aktiv durch den Leitungstreiber 1 nachgebildet werden und entfällt dann als Bauteil.

Zur Nachbildung des Leitungsabschlusswiderstands R7 (soweit vorhanden) ist ein Widerstand R8 vorgesehen, welcher parallel zu der Replika 8 der Übertragungsstrecke 17 und der Replika 19 des Leitungstreibers 1 geschaltet ist. Der Widerstand R8 kann auch in die Replika 8 der Übertragungsstrecke 17 integriert werden und ist dann nicht mehr als separates Bauteil vorhanden.

Die Replika 19 des Leitungstreibers 1 bildet das Verhalten des Leitungstreibers 1 möglichst exakt nach, wobei gegebenenfalls auch eine skalierte Nachbildung möglich ist, und empfängt dieselben Sendedaten wie der Leitungstreiber 1. Auf diese Weise wird von der Replika 19 des Leitungstreibers 1 ein Signal in die Parallelschaltung aus dem Widerstand R8 und der Replika 8 der Übertragungsstrecke 17 eingespeist, welches identisch zu dem Sendesignal des Leitungstreibers 1 ist. Die Spannung am Punkt D entspricht in erster Näherung der Echospannung am Punkt A (= Punkt B), wobei das Verhalten des Übertragers 13 sowie der Bridge Taps 14 noch nicht berücksichtigt ist. Wie bei den in Fig. 1 und Fig. 2 gezeigten Ausführungsbeispielen ist zur Berücksichtigung des Verhaltens des Übertragers 13 mindestens ein Tiefpaß 3,4 und zur Berücksichtigung der Bridge Taps 14 mindestens ein Bandpaß 9, 10 vorgesehen, denen jeweils die am Punkt D anliegende Spannung als Eingangssignal zugeführt ist.

Die Komponenten der in Fig. 3 gezeigten Schaltungsanordnung, welche bereits in Fig. 1 oder Fig. 2 gezeigt sind, entsprechen den in Fig. 1 und Fig. 2 gezeigten Komponenten, so daß diesbezüglich sowie bezüglich der Funktionsweise der in Fig. 3 gezeigten Schaltungsanordnung auf die obigen Erläuterungen zu Fig. 1 und Fig. 2 verwiesen werden kann.

## Patentansprüche

1. Schaltungsanordnung zur analogen Echounterdrückung für das Empfangssignal einer über einen Übertrager an eine Übertragungsstrecke angeschlossenen Kommunikationsvorrichtung,
mit ersten Schaltungsmitteln (8),welche zur Nachbildung des Verhaltens der Übertragungsstrecke (17) eingerichtet sind, mit zweiten Schaltungsmitteln (3, 4), welche zur Nachbildung des Verhaltens des Übertragers (13) eingerichtet sind, und mit dritten Schaltungsmitteln (2), welche zur Korrektur eines an dem Übertrager (13) abgegriffenen Signals, welches einen Empfangssignalanteil und einen Sendesignalanteil der Kommunikationsvorrichtung umfaßt, durch ein Signal der ersten Schaltungsmittel (8) und ein Signal der zweiten Schaltungsmittel (3, 4), eingerichtet sind, um den Empfangssignalanteil mit unterdrücktem Sendesignalanteil zu erhalten,
**dadurch gekennzeichnet,**
**daß** die zweiten Schaltungsmittel mindestens einen Tiefpaß (3, 4) umfassen, welcher zur Nachbildung des Verhaltens des Übertragers (13) eingerichtet ist und dem als Eingangssignal ein Signal zugeführt ist, welches dem von der Kommunikationsvorrichtung über die Übertragungsstrecke (17) zu übertragenden Sendesignal entspricht.

2. Schaltungsanordnung nach Anspruch 1,
**dadurch gekennzeichnet,**
**daß** die Kommunikationsvorrichtung einen Leitungstreiber (1) und zwischen den Leitungstreiber (1) und den übertrager (13) geschaltete passive Bauelemente (R1, R2) umfaßt,
wobei die ersten Schaltungsmittel (8) zwischen dem Leitungstreiber (1) und den passiven Bauelementen (R1, R2) angeschlossen sind.

3. Schaltungsanordnung nach Anspruch 2,
**dadurch gekennzeichnet,**
**daß** das zu korrigierende Signal, welches den Empfangssignalanteil und den Sendesignalanteil umfaßt, zwischen den passiven Bauelementen (R1, R2) und dem übertrager (13) abgegriffen und den dritten Schaltungsmitteln (2) zugeführt ist.

4. Schaltungsanordnung nach Anspruch 1 oder 2,
**dadurch gekennzeichnet,**
**daß** das zu korrigierende Signal, welches den Empfangssignalanteil und den Sendesignalanteil umfaßt, an einer zusätzlichen Windung des Übertragers (13) abgegriffen und den dritten Schaltungsmitteln (2) zugeführt ist.

5. Schaltungsanordnung nach einem der Ansprüche 2-4,
**dadurch gekennzeichnet,**
**daß** die ersten Schaltungsmittel einen ersten Schaltungsabschnitt (R3, R4), welcher zur Nachbildung des Verhaltens der passiven Bauelemente (R1, R2) eingerichtet ist, und einen zweiten Schaltungsabschnitt (8), welcher zur Nachbildung des Verhaltens der Übertragungsstrecke (17) eingerichtet ist, umfassen.

6. Schaltungsanordnung nach Anspruch 5,
**dadurch gekennzeichnet,**
**daß** der erste Schaltungsabschnitt Widerstände (R3, R4), welche zur Nachbildung des Verhaltens der als Vorwiderstände (R1, R2) ausgestalteten passiven Bauelemente eingerichtet sind, umfaßt.

7. Schaltungsanordnung nach Anspruch 5 oder 6,
**dadurch gekennzeichnet,**
**daß** der zweite Schaltungsabschnitt (8) ein passives Netzwerk, welches zur Nachbildung des Verhaltens der Übertragungsstrecke (17) eingerichtet ist, umfaßt.

8. Schaltungsanordnung nach Anspruch 7,
**dadurch gekennzeichnet,**
**daß** der zweite Schaltungsabschnitt (8) ein passives RC-Netzwerk, welches zur Nachbildung des Verhaltens der Übertragungsstrecke (17) eingerichtet ist, umfaßt.

9. Schaltungsanordnung nach einem der Ansprüche 5-8,
**dadurch gekennzeichnet,**
**daß** dem mindestens einen Tiefpaß (3, 4) der zweiten Schaltungsmittel als Eingangssignal das Sendesignal des Leitungstreibers (1) oder ein zwischen dem ersten Schaltungsabschnitt (R3, R4) und dem zweiten Schaltungsabschnitt (8) der ersten Schaltungsmittel abgegriffenes Signal zugeführt ist.

10. Schaltungsanordnung nach einem der Ansprüche 5-9,
**dadurch gekennzeichnet,**
**daß** den dritten Schaltungsmitteln (2) das zu korrigierende Signal, welches den Empfangssignalanteil und den Sendesignalanteil umfaßt, das Ausgangssignal des mindestens einen Tiefpasses (3, 4) der zweiten Schaltungsmittel und das zwischen dem ersten Schaltungsabschnitt (R3, R4) und dem zweiten Schaltungsabschnitt (8) der zweiten Schaltungsmittel abgegriffene Signal zugeführt ist,
wobei die dritten Schaltungsmittel (2) derart ausgestaltet sind, daß sie zu dem zu korrigierenden Signal, welches den Empfangssignalanteil und den Sendesignalanteil umfaßt, das Ausgangssignal des mindestens einen Tiefpasses (3, 4) der zweiten Schaltungsmittel hinzuaddieren und davon das zwischen dem ersten Schaltungsabschnitt (R3, R4) und dem zweiten Schaltungsabschnitt (8) der ersten Schaltungsmittel abgegriffenes Signal subtrahieren, um den Empfangssignalanteil mit unterdrücktem Sendesignalanteil zu erhalten.

11. Schaltungsanordnung nach Anspruch 6 und einem der vorhergehenden Ansprüche,
**dadurch gekennzeichnet,**
**daß** den Widerständen (R3, R4) des ersten Schaltungsabschnitts der ersten Schaltungsmittel jeweils ein Kondensator (C3, C4) parallel geschaltet ist.

12. Schaltungsanordnung nach einem der Ansprüche 5-11,
**dadurch gekennzeichnet,**
**daß** der erste Schaltungsabschnitt (R3-R6, C3-C6) sowohl zwischen dem Leitungstreiber (1) und den passiven Bauelementen (R1, R2) als auch zwischen den passiven Bauelementen (R1, R2) und dem Übertrager (13) angeschlossen ist.

13. Schaltungsanordnung nach einem der vorhergehenden Ansprüche,
**dadurch gekennzeichnet,**
**daß** das zu korrigierende Signal, welches den Empfangssignalanteil und den Sendesignalanteil umfaßt, den dritten Schaltungsmitteln (2) über eine Gewichtungseinrichtung (18) mit einem variablen Gewichtungsfaktor (a) zugeführt ist.

14. Schaltungsanordnung nach einem der vorhergehenden Ansprüche,
**dadurch gekennzeichnet,**
**daß** das von den ersten Schaltungsmitteln (8) den dritten Schaltungsmitteln (2) zugeführte Signal über eine Gewichtungseinrichtung (7) mit einem variablen Gewichtungsfaktor (7) zugeführt ist.

15. Schaltungsanordnung nach einem der vorhergehenden Ansprüche,
**dadurch gekennzeichnet,**
**daß** das mindestens eine Ausgangssignal des mindestens einen Tiefpasses (3, 4) der zweiten Schaltungsmittel über eine Gewichtungseinrichtung (5, 6) mit einem variablen Gewichtunasfaktor (cl, cn) den dritten Schaltungsmitteln (2) zugeführt ist.

16. Schaltungsanordnung nach einem der vorhergehenden Ansprüche,
**dadurch gekennzeichnet,**
**daß** die zweiten Schaltungsmittel mindestens zwei parallel geschaltete Tiefpässe (3, 4) umfassen, welche zur Nachbildung des Verhaltens des Übertragers (13) eingerichtet sind und deren Ausgangssignale jeweils den dritten Schaltungsmitteln (2) zur Addition zu dem zu korrigierenden Signal, welches den Empfangssignalanteil und den Sendesignalanteil umfaßt, zugeführt sind, und
**daß** der eine Tiefpaß (3) ein Tiefpaß erster Ordnung und der andere Tiefpaß (4) ein Tiefpaß zweiter Ordnung ist.

17. Schaltungsanordnung nach Anspruch 15 und Anspruch 16,
**dadurch gekennzeichnet,**
**daß** für die Gewichtungsfaktoren der den beiden Tiefpässen (3, 4) zugewiesenen Gewichtungseinrichtungen (5, 6) die Beziehung c2 = 1 - c1 gilt, wobei c1 der dem einen Tiefpaß (3) zugeordnete Gewichtungsfaktor und c2 der dem anderen Tiefpaß (4) zugeordnete Gewichtungsfaktor ist.

18. Schaltungsanordnung nach einem der vorhergehenden Ansprüche,
**dadurch gekennzeichnet,**
**daß** mindestens ein Parameter, insbesondere die Grenzfrequenz, des mindestens einen Tiefpasses (3, 4) der zweiten Schaltungsmittel variabel einstellbar ist.

19. Schaltungsanordnung nach einem der vorhergehenden Ansprüche,
**dadurch gekennzeichnet,**
**daß** vierte Schaltungsmittel (9, 10), welche zur Nachbildung des Verhaltens von an die Übertragungsstrecke (17) angeschlossenen Stichleitungen (14) eingerichtet sind, vorgesehen sind, wobei ein Signal der vierten Schaltungsmittel (9, 10) den dritten Schaltungsmitteln (2) zur Korrektur des Signals, welches den Empfangssignalanteil und den Sendesignalanteil umfaßt, zugeführt ist.

20. Schaltungsanordnung nach Anspruch 5 und Anspruch 19,
**dadurch gekennzeichnet,**
**daß** die vierten Schaltungsmittel mindestens einen Bandpaßfilter (9, 10) umfassen, dem als Eingangssignal das Sendesignal des Leitungstreibers (1) oder ein zwischen dem ersten Schaltungsabschnitt (R3, R4) und dem zweiten Schaltungsabschnitt (8) der ersten Schaltungsmittel abgegriffenes Signal zugeführt ist.

21. Schaltungsanordnung nach Anspruch 20,
**dadurch gekennzeichnet,**
**daß** die vierten Schaltungsmittel mehrere parallel geschaltete Bandpaßfilter (9, 10) umfassen.

22. Schaltungsanordnung nach Anspruch 20 oder 21,
**dadurch gekennzeichnet,**
**daß** das Ausgangssignal des mindestens einen Bandpaßfilters (9, 10) über eine Gewichtungseinrichtung (11, 12) mit einem variablen Gewichtungsfaktor (b1, bn) den dritten Schaltungsmitteln (2) zugeführt ist.

23. Schaltungsanordnung nach einem der Ansprüche 20-22,
**dadurch gekennzeichnet,**
**daß** das Ausgangssignal des mindestens einen Bandpaßfilters (9, 10) den dritten Schaltungsmitteln (2) zur Subtraktion von dem zu korrigierenden Signal, welches den Empfangssignal anteil und den Sendesignalanteil umfaßt, zugeführt ist.

24. Schaltungsanordnung nach einem der Ansprüche 20-23,
**dadurch gekennzeichnet,**
**daß** mindestens ein Parameter, insbesondere die Güte, die Grenzfrequenz und/oder die Verstärkung, des mindestens einen Bandpaßfilters (9, 10) der vierten Schaltungsmittel variabel einstellbar ist.

25. Schaltungsanordnung nach einem der Ansprüche 19-24,
**dadurch gekennzeichnet,**
**daß** die zweiten Schaltungsmittel (3, 4), die dritten Schaltungsmittel (2) und die vierten Schaltungsmittel (9, 10) auf einem gemeinsamen Chip vorgesehen sind, während die ersten Schaltungsmittel (8) extern von dem Chip vorgesehen sind.

26. Schaltungsanordnung nach einem der Ansprüche 1 oder 13-25,
**dadurch gekennzeichnet,**
**daß** die Kommunikationsvorrichtung einen Leitungstreiber (1) zur Erzeugung des Sendesignals umfaßt, und
**daß** weitere Schaltungsmittel (19), welche zur Nachbildung des Verhaltens des Leitungstreibers (1) eingerichtet sind, vorgesehen sind, wobei dem mindestens einen Tiefpaß (3, 4) der zweiten Schaltungsmittel als Eingangssignal ein von den weiteren Schaltungsmitteln (19) erzeugtes und dem Sendesignal des Leitungstreibers (1) entsprechendes Signals zugeführt ist.

27. Schaltungsanordnung nach Anspruch 26,
**dadurch gekennzeichnet,**
**daß** der Leitungstreiber (1) ein nach dem Prinzip einer Stromquelle arbeitender Leitungstreiber (1) ist.

28. Schaltungsanordnung nach Anspruch 26 oder 27,
**dadurch gekennzeichnet,**
**daß** die weiteren Schaltungsmittel (19), welche zur Nachbildung des Verhaltens des Leitungstreibers (1) eingerichtet sind, mit den ersten Schaltungsmitteln (8), welche zur Nachbildung des Verhaltens der Übertragungsstrecke (17) eingerichtet sind, gekoppelt sind, und
**daß** dem mindestens einen Tiefpaß (3, 4) der zweiten Schaltungsmittel als Eingangssignal ein zwischen den weiteren Schaltungsmitteln (19) und den ersten Schaltungsmitteln (8) abgegriffenes Signal zugeführt ist.

29. Schaltungsanordnung nach einem der Ansprüche 26-28,
**dadurch gekennzeichnet,**
**daß** die Kommunikationsvorrichtung ein zwischen den Leitungstreiber (1) und den Übertrager (13) geschaltetes passive Bauelement (R7) umfaßt,
wobei das zu korrigierende Signal, welches den Empfangssignalanteil und den Sendesignalanteil umfaßt, zwischen dem Leitungstreiber (1) und dem passiven Bauelement (R7) abgegriffen und den dritten Schaltungsmitteln (2) zugeführt ist.

30. Schaltungsanordnung nach Anspruch 29,
**dadurch gekennzeichnet,**
**daß** die ersten Schaltungsmittel einen ersten Schaltungsabschnitt (R8), welcher zur Nachbildung des Verhaltens des passiven Bauelements (R7) eingerichtet ist, und einen mit dem ersten Schaltungsabschnitt (R8) gekoppelten zweiten Schaltungsabschnitt (8) zur Nachbildung des Verhaltens der Übertragungsstrecke (17) umfassen, und daß dem mindestens einen Tiefpaß (3, 4) der zweiten Schaltungsmittel ein zwischen den weiteren Schaltungsmitteln (19) und dem ersten Schaltungsabschnitt (R8) der ersten Schaltungsmittel abgegriffenes Signal zugeführt ist.

31. Schaltungsanordnung nach Anspruch 30,
**dadurch gekennzeichnet,**
**daß** den dritten Schaltungsmitteln (2) das zu korrigierende Signal, welches den Empfangssignalanteil und den Sendesignalanteil umfaßt, das Ausgangssignal des mindestens einen Tiefpasses (3, 4) der zweiten Schaltungsmittel und das zwischen den weiteren Schaltungsmitteln (19) und dem ersten Schaltungsabschnitt (R8) der ersten Schaltungsmittel abgegriffene Signal zugeführt ist,
wobei die dritten Schaltungsmittel (2) derart ausgestaltet sind, daß sie zu dem zu korrigierenden Signal, welches den Empfangssignalanteil und den Sendesignalanteil umfaßt, das Ausgangssignal des mindestens einen Tiefpasses (3, 4) der zweiten Schaltungsmittel hinzuaddieren und davon das zwischen den weiteren Schaltungsmitteln (19) und dem ersten Schaltungsabschnitt (R8) der ersten Schaltungsmittel abgegriffenes Signal subtrahieren, um den Empfangssignalanteil mit unterdrücktem Sendesignalanteil zu erhalten.

32. Schaltungsanordnung nach Anspruch 30 oder 31,
**dadurch gekennzeichnet,**
**daß** der zweite Schaltungsabschnitt (8) der ersten Schaltungsmittel ein passives Netzwerk, welches zur Nachbildung des Verhaltens der Übertragungsstrecke (17) eingerichtet ist, umfaßt.

33. Schaltungsanordnung nach Anspruch 32,
**dadurch gekennzeichnet,**
**daß** der zweite Schaltungsabschnitt (8) der ersten Schaltungsmittel ein passives RC-Netzwerk, welches zur Nachbildung des Verhaltens der Übertragungsstrecke (17) eingerichtet ist, umfaßt.

34. Schaltungsanordnung nach einem der Ansprüche 30-33,
**dadurch gekennzeichnet,**
**daß** der erste Schaltungsabschnitt der ersten Schaltungsmittel einen Widerstand (R8), welcher zur Nachbildung des Verhaltens des als Widerstand (R7) ausgestalteten passiven Bauelements eingerichtet ist, umfaßt.

35. Schaltungsanordnung nach einem der Ansprüche 30-34,
**dadurch gekennzeichnet,**
**daß** der erste Schaltungsabschnitt (R8), welcher zur Nachbildung des Verhaltens des passiven Bauelements (R7) eingerichtet ist, in den zweiten Schaltungsabschnitt (8), welcher zur Nachbildung des Verhaltens der Übertragungsstrecke (17) eingerichtet ist, integriert ist.

## Claims

1. A circuit arrangement for analogue echo suppression in respect of the received signal of a communications device connected to a transmission link via a repeater, with first circuit means (8) which are adapted for simulating the behaviour of the transmission link (17), with second circuit means (3, 4) which are adapted for simulating the behaviour of the repeater (13), and with third circuit means (2) which are adapted for correcting a signal that is tapped at the repeater (13) and that comprises a received-signal portion and a transmitted-signal portion of the communications device by means of a signal of the first circuit means (8) and a signal of the second circuit means (3, 4), in order to obtain the received-signal portion with suppressed transmitted-signal portion,
**characterised in that**
the second circuit means comprise at least one low-pass filter (3, 4) which is adapted for simulating the behaviour of the repeater (13) and to which a signal that corresponds to the transmitted signal to be transmitted from the communications device via the transmission link (17) is supplied as an input signal.

2. Circuit arrangement according to Claim 1,
**characterised in that**
the communications device comprises a line driver (1) and passive components (R1, R2) connected between the line driver (1) and the repeater (13),
the first circuit means (8) being connected between the line driver (1) and the passive components (R1, R2).

3. Circuit arrangement according to Claim 2,
**characterised in that**
the signal to be corrected, which comprises the received-signal portion and the transmitted-signal portion, is tapped between the passive components (R1, R2) and the repeater (13) and supplied to the third circuit means (2).

4. Circuit arrangement according to Claim 1 or 2,
**characterised in that**
the signal to be corrected, which comprises the received-signal portion and the transmitted-signal portion, is tapped at an additional turn of the repeater (13) and supplied to the third circuit means (2).

5. Circuit arrangement according to one of Claims 2-4,
**characterised in that**
the first circuit means comprise a first circuit segment (R3, R4), which is adapted for simulating the behaviour of the passive components (R1, R2), and a second circuit segment (8) which is adapted for simulating the behaviour of the transmission link (17).

6. Circuit arrangement according to Claim 5,
**characterised in that**
the first circuit segment comprises resistors (R3, R4) which are adapted for simulating the behaviour of the passive components configured as dropping resistors (R1, R2).

7. Circuit arrangement according to Claim 5 or 6,
**characterised in that**
the second circuit segment (8) comprises a passive network which is adapted for simulating the behaviour of the transmission link (17).

8. Circuit arrangement according to Claim 7,
**characterised in that**
the second circuit segment (8) comprises a passive RC network which is adapted for simulating the behaviour of the transmission link (17).

9. Circuit arrangement according to one of Claims 5-8,
**characterised in that**
the transmitted signal of the line driver (1) or a signal tapped between the first circuit segment (R3, R4) and the second circuit segment (8) of the first circuit means is supplied to the at least one low-pass filter (3, 4) of the second circuit means by way of input signal.

10. Circuit arrangement according to one of Claims 5-9,
**characterised in that**
the signal to be corrected, which comprises the received-signal portion and the transmitted-signal portion, the output signal of the at least one low-pass filter (3, 4) of the second circuit means and the signal tapped between the first circuit segment (R3, R4) and the second circuit segment (8) of the first circuit means is supplied to the third circuit means (2),
the third circuit means (2) being configured in such a way that they add to the signal to be corrected, which comprises the received-signal portion and the transmitted-signal portion, the output signal of the at least one low-pass filter (3, 4) of the second circuit means and subtract therefrom the signal tapped between the first circuit segment (R3, R4) and the second circuit segment (8) of the first circuit means, in order to obtain the received-signal portion with suppressed transmitted-signal portion.

11. Circuit arrangement according to Claim 6 and one of the preceding claims,
**characterised in that**
a capacitor (C3, C4) is connected in parallel to the respective resistor (R3, R4) of the first circuit segment of the first circuit means.

12. Circuit arrangement according to one of Claims 5-11,
**characterised in that**
the first circuit segment (R3-R6, C3-C6) is connected both between the line driver (1) and the passive components (R1, R2) and between the passive components (R1, R2) and the repeater (13).

13. Circuit arrangement according to one of the preceding claims,
**characterised in that**
the signal to be corrected, which comprises the received-signal portion and the transmitted-signal portion, is supplied to the third circuit means (2) via a weighting device (18) with a variable weighting factor (a).

14. Circuit arrangement according to one of the preceding claims,
**characterised in that**
the signal supplied from the first circuit means (8) to the third circuit means (2) is supplied via a weighting device (7) with a variable weighting factor (d).

15. Circuit arrangement according to one of the preceding claims,.
**characterised in that**
the at least one output signal of the at least one low-pass filter (3, 4) of the second circuit means is supplied to the third circuit means (2) via a weighting device (5, 6) with a variable weighting factor (c1, cn).

16. Circuit arrangement according to one of the preceding claims,
**characterised in that**
the second circuit means comprise at least two low-pass filters (3, 4) connected in parallel which are adapted for simulating the behaviour of the repeater (13) and which have output signals that are supplied in each instance to the third circuit means (2) for addition to the signal to be corrected, which comprises the received-signal portion and the transmitted-signal portion, and
**in that** the one low-pass filter (3) is a first-order low-pass filter and the other low-pass filter (4) is a second-order low-pass filter.

17. Circuit arrangement according to Claim 15 and Claim 16,
**characterised in that**
the relationship c2 = 1 - c1 holds for the weighting factors of the weighting devices (5, 6) allocated to the two low-pass filters (3, 4), where c1 is the weighting factor assigned to the one low-pass filter (3) and c2 is the weighting factor assigned to the other low-pass filter (4) .

18. Circuit arrangement according to one of the preceding claims,
**characterised in that**
at least one parameter, in particular the cut-off frequency, of the at least one low-pass filter (3, 4) of the second circuit means is variably adjustable.

19. Circuit arrangement according to one of the preceding claims,
**characterised in that**
fourth circuit means (9, 10) which are adapted for simulating the behaviour of branch lines (14) connected to the transmission link (17) are provided, a signal of the fourth circuit means (9, 10) being supplied to the third circuit means (2) for the purpose of correcting the signal that comprises the received-signal portion and the transmitted-signal portion.

20. Circuit arrangement according to Claim 5 and Claim 19,
**characterised in that**
the fourth circuit means comprise at least one band-pass filter (9, 10), to which the transmitted signal of the line driver (1) or a signal tapped between the first circuit segment (R3, R4) and the second circuit segment (8) of the first circuit means is supplied by way of input signal.

21. Circuit arrangement according to Claim 20,
**characterised in that**
the fourth circuit means comprise several band-pass filters (9, 10) connected in parallel.

22. Circuit arrangement according to Claim 20 or 21,
**characterised in that**
the output signal of the at least one band-pass filter (9, 10) is supplied to the third circuit means (2) via a weighting device (11, 12) with a variable weighting factor (b1, bn).

23. Circuit arrangement according to one of Claims 20-22,
**characterised in that**
the output signal of the at least one band-pass filter (9, 10) is supplied to the third circuit means (2) for subtraction from the signal to be corrected, which comprises the received-signal portion and the transmitted-signal portion.

24. Circuit arrangement according to one of Claims 20-23,
**characterised in that**
at least one parameter, in particular the quality factor, the cut-off frequency and/or the amplification, of the at least one band-pass filter (9, 10) of the fourth circuit means is variably adjustable.

25. Circuit arrangement according to one of Claims 19-24,
**characterised in that**
the second circuit means (3, 4), the third circuit means (2) and the fourth circuit means (9, 10) are provided on a common chip, whereas the first circuit means (8) are provided outside the chip.

26. Circuit arrangement according to one of Claims 1 or 13-25,
**characterised in that**
the communications device comprises a line driver (1) for generating the transmitted signal, and
**in that** further circuit means (19) which are adapted for simulating the behaviour of the line driver (1) are provided, a signal that is generated by the further circuit means (19) and that corresponds to the transmitted signal of the line driver (1) being supplied to the at least one low-pass filter (3, 4) of the second circuit means by way of input signal.

27. Circuit arrangement according to Claim 26,
**characterised in that**
the line driver (1) is a line driver (1) operating in accordance with the principle of a power source.

28. Circuit arrangement according to Claim 26 or 27,
**characterised in that**
the further circuit means (19), which are adapted for simulating the behaviour of the line driver (1), are coupled with the first circuit means (8), which are adapted for simulating the behaviour of the transmission link (17), and
**in that** a signal tapped between the further circuit means (19) and the first circuit means (8) is supplied to the at least one low-pass filter (3, 4) of the second circuit means by way of input signal.

29. Circuit arrangement according to one of Claims 26-28,
**characterised in that**
the communications device comprises a passive component (R7) connected between the line driver (1) and the repeater (13),
the signal to be corrected, which comprises the received-signal portion and the transmitted-signal portion, being tapped between the line driver (1) and the passive component (R7) and supplied to the third circuit means (2).

30. Circuit arrangement according to Claim 29,
**characterised in that**
the first circuit means comprise a first circuit segment (R8), which is adapted for simulating the behaviour of the passive component (R7), and a second circuit segment (8) coupled with the first circuit segment (R8) for simulating the behaviour of the transmission link (17), and
**in that** a signal tapped between the further circuit means (19) and the first circuit segment (R8) of the first circuit means is supplied to the at least one low-pass filter (3, 4) of the second circuit means.

31. Circuit arrangement according to Claim 30,
**characterised in that**
the signal to be corrected, which comprises the received-signal portion and the transmitted-signal portion, the output signal of the at least one low-pass filter (3, 4) of the second circuit means and the signal tapped between the further circuit means (19) and the first circuit segment (R8) of the first circuit means is supplied to the third circuit means (2),
the third circuit means (2) being configured in such a way that they add to the signal to be corrected, which comprises the received-signal portion and the transmitted-signal portion, the output signal of the at least one low-pass filter (3, 4) of the second circuit means and subtract therefrom the signal tapped between the further circuit means (19) and the first circuit segment (R8) of the first circuit means, in order to obtain the received-signal portion with suppressed transmitted-signal portion.

32. Circuit arrangement according to Claim 30 or 31,
**characterised in that**
the second circuit segment (8) of the first circuit means comprises a passive network which is adapted for simulating the behaviour of the transmission link (17).

33. Circuit arrangement according to Claim 32,
**characterised in that**
the second circuit segment (8) of the first circuit means comprises a passive RC network which is adapted for simulating the behaviour of the transmission link (17).

34. Circuit arrangement according to one of Claims 30-33,
**characterised in that**
the first circuit segment of the first circuit means comprises a resistor (R8) which is adapted for simulating the behaviour of the passive component configured as a resistor (R7).

35. Circuit arrangement according to one of Claims 30-34,
**characterised in that**
the first circuit segment (R8), which is adapted for simulating the behaviour of the passive component (R7), is integrated into the second circuit segment (8) which is adapted for simulating the behaviour of the transmission link (17).

## Revendications

1. Montage pour la suppression analogique d'échos pour le signal de réception d'un dispositif de communication raccordé par l'intermédiaire d'un transformateur à une section de transmission comportant, des premiers moyens formant circuit (8) qui sont conçus pour simuler le comportement de la section de transmission (17),
des deuxièmes moyens formant circuit (3, 4), qui sont agencés pour réaliser la simulation du comportement du transformateur (13), et
des troisièmes moyens formant circuit (2), qui sont conçus de manière à corriger un signal prélevé sur le transformateur (13) et qui comprend une composante du signal de réception et une composante du signal d'émission du dispositif de communication, au moyen d'un signal des premiers moyens formant circuit (8) et d'un signal des deuxièmes moyens formant circuit (3, 4), pour obtenir la composante du signal de réception avec une composante supprimée du signal d'émission,
**caractérisé en ce**
**que** les deuxièmes moyens formant circuit comprennent au moins un filtre passe-bas (3, 4), qui est conçu pour réaliser la simulation du comportement du transformateur (13) et auquel est envoyé comme signal d'entrée un signal qui correspond au signal d'entrée d'émission devant être transmis par le dispositif de communication par l'intermédiaire de la section de transmission (17).

2. Montage selon la revendication 1, **caractérisé en ce que** le dispositif de communication comprend un étage d'attaque de ligne (1) et des composants passifs (R1, R2) branchés entre l'étage d'attaque de ligne (1) et le transformateur (13), les premiers moyens formant circuit (8) étant connectés entre l'étage d'attaque de ligne (1) et les composants passifs (R1, R2).

3. Montage selon la revendication 2, **caractérisé en ce que** le signal à corriger, qui comprend la partie de la composante du signal de réception et la composante du signal d'émission, est prélevé entre les composants passifs (R1, R2) et le transformateur (13), et est envoyé aux troisièmes moyens formant circuit (2).

4. Montage selon la revendication 1 ou 2, **caractérisé en ce que** le signal à corriger, qui comprend la composante du signal de réception et la composante du signal d'émission, est prélevé à un enroulement supplémentaire du transformateur (13) et est envoyé aux troisièmes moyens formant circuit (2).

5. Montage selon l'une des revendications 2 à 4, **caractérisé en ce que** les premiers moyens formant circuit comprennent une première section de circuit (R3, R4), qui est agencée pour simuler le comportement des composants passifs (R1, R2), et une seconde section de circuit (8), qui est agencée de manière à simuler le comportement de la section de transmission (17).

6. Montage selon la revendication 5, **caractérisé en ce que** la première section de circuit comprend des résistances (R3, R4), qui sont agencées de manière à simuler le comportement des composants passifs agencés sous la forme de résistances additionnelles (R1, R2).

7. Montage selon la revendication 5 ou 6, **caractérisé en ce que** la seconde section de circuit (8) comprend un réseau passif, qui est agencé de manière à simuler le comportement de la section de transmission (17).

8. Montage selon la revendication 7, **caractérisé en ce que** la seconde section de circuit (8) comporte un réseau RC passif, qui est agencé de manière à simuler le comportement de la section de transmission (17).

9. Montage selon l'une des revendications 5 à 8, **caractérisé en ce qu'**à au moins un filtre passe-bas (3, 4) des seconds moyens formant circuit est envoyé, en tant que signal d'entrée, le signal d'émission de l'étage d'attaque de ligne (1) ou un signal prélevé entre la première section de circuit (R3, R4) et la seconde section de circuit (8) des premiers moyens formant circuit.

10. Montage selon l'une des revendications 5 à 9, **caractérisé en ce**
**qu'**aux troisième moyens formant circuit (8) sont envoyés le signal à corriger, qui comprend la composante du signal de réception et la composante du signal d'émission, et le signal de sortie du au moins un filtre passe-bas (3, 4) des deuxièmes moyens formant circuit et le signal prélevé entre la première section de circuit (R3, R4) et la seconde section de circuit (8) des deuxièmes moyens formant circuit,
dans lequel les troisièmes moyens formant circuit (2) sont agencés de telle sorte qu'ils additionnent un signal à corriger, qui comprend la composante du signal de réception et la composante du signal d'émission, le signal de sortie du au moins un filtre passe-bas (3, 4) des deuxièmes moyens formant circuit et qu'à partir du signal est soustrait le signal qui est prélevé entre la première section de circuit (R3, R4) et la seconde section de circuit (8) des premiers moyens formant circuit, pour l'obtention de la composante du signal de réception avec la composante du signal d'émission supprimée.

11. Montage selon la revendication 6 et l'une des revendications précédentes, **caractérisé en ce**
**que** respectivement un condensateur (C3, C4) est branché en parallèle avec la résistance (R3, R4) de la première section de circuit des premiers moyens formant circuit.

12. Montage selon l'une des revendications 5 à 11, **caractérisé en ce**
**que** la première section de circuit (R3-R6, C3-C6) est raccordée aussi bien entre l'étage d'attaque de ligne (1) et les composants passifs (R1, R2) qu'entre les composants passifs (R1, R2) et le transformateur (13).

13. Montage selon l'une des revendications précédentes, **caractérisé en ce**
**que** le signal à corriger, qui comprend la composante du signal de réception et la composante du signal d'émission, est envoyé aux troisièmes moyens formant circuit (2) par l'intermédiaire d'un dispositif de pondération (18) possédant un facteur de pondération (a) variable.

14. Montage selon l'une des revendications précédentes, **caractérisé en ce que** le signal envoyé par les premiers moyens formant circuit (8) aux troisièmes moyens formant circuit (2) est envoyé par l'intermédiaire d'un dispositif de pondération (7) possédant un facteur de pondération variable (7).

15. Montage selon l'une des revendications précédentes, **caractérisé en ce**
**que** le au moins un signal d'entrée du au moins un filtre passe-bas (3, 4) des deuxièmes moyens formant circuit est envoyé aux troisièmes moyens formant circuit (2) par l'intermédiaire d'un dispositif de pondération (5, 6) présentant un facteur de pondération variable (c1, cn).

16. Montage selon l'une des revendications précédentes, **caractérisé en ce**
**que** les deuxièmes moyens formant circuit comprennent au moins deux filtres passe-bas (3, 4) branchés en parallèle, qui sont conçus pour simuler le comportement du transformateur (13) et dont les signaux de sortie sont envoyés respectivement aux troisièmes moyens formant circuit (2) pour être ajoutés au signal à corriger, qui comprend la composante du signal de réception et la composante du signal d'émission, et
**qu'**un filtre passe-bande est un filtre passe-bande du premier ordre et que l'autre filtre passe-bande (4) est un filtre passe-bande du second ordre.

17. Montage selon la revendication 15 et la revendication 16, **caractérisé en ce que** pour les facteurs de pondération des dispositifs de pondération (5, 6) affectés aux deux filtres passe-bas (3, 4), la relation c2 = 1 - c1, c1 étant le facteur de pondération associé à un filtre passe-bande (3) et c2 le facteur de pondération associé à l'autre filtre passe-bande (4).

18. Montage selon l'une des revendications précédentes, **caractérisé en ce qu'**au moins un paramètre, notamment la fréquence limite, du au moins un filtre passe-bas (3, 4) des seconds moyens formant circuit est réglable d'une manière variable.

19. Montage selon l'une des revendications précédentes, **caractérisé en ce**
**qu'**il est prévu des quatrièmes moyens formant circuit (9, 10), qui sont conçus pour simuler le comportement de lignes de dérivation (14) connectées à la section de transmission (17), un signal des quatrièmes moyens formant circuit (9, 10) étant envoyés aux troisièmes moyens formant circuit (2) pour corriger le signal, qui comprend la composante du signal de réception et la composante du signal d'émission.

20. Montage selon la revendication 5 et la revendication 19, **caractérisé en ce**
**que** les quatrièmes moyens formant circuits comprennent au moins un filtre passe-bande (9, 10), auquel est envoyé, comme signal d'entrée, le signal d'émission de l'étage d'attaque de ligne (1) ou un signal prélevé entre la première section de circuit (R3, R4) et la seconde section de circuit (8) des premiers moyens formant circuit.

21. Montage selon la revendication 20,
**caractérisé en ce que** les quatrièmes moyens formant circuit comprennent plusieurs filtres passe-bande (9, 10) branchés en parallèle.

22. Montage selon la revendication 20 ou 21,
**caractérisé en ce**
**que** le signal de sortie du premier filtre passe-bande (9, 10) est envoyé par l'intermédiaire d'un dispositif de pondération (11, 12) ayant un facteur de pondération variable (ba, bn) aux troisièmes moyens formant circuit (2).

23. Montage selon l'une des revendications 20 à 22, **caractérisé en ce que**
que le signal de sortie du au moins un filtre passe-bande (9, 10) est envoyé aux troisièmes moyens formant circuit (2) pour soustraire le signal à corriger, qui comporte la composante du signal de réception et la composante du signal d'émission.

24. Montage selon l'une des revendications 20 à 23, **caractérisé en ce**
**qu'**au moins un paramètre, notamment le facteur de qualité, la fréquence limite, et/ou l'amplification, du au moins un filtre passe-bande (9, 10) des quatrièmes moyens formant circuit est réglable de façon variable.

25. Montage selon l'une des revendications 19 à 24, **caractérisé en ce**
**que** les deuxièmes moyens formant circuit (3, 4), les troisième moyens formant circuit (2) et les quatrièmes moyens formant circuit (9, 10) sont prévus sur une plaquette commune, tandis que les premiers moyens formant circuit (8) sont prévus à l'extérieur de la plaquette.

26. Montage selon l'une des revendications 1 ou 13 à 25, **caractérisé en ce**
**que** le dispositif de communication comprend un étage d'attaque de ligne (1) servant à produire le signal d'émission et
**qu'**il est prévu d'autres moyens formant circuit (19), qui sont agencés de manière à simuler le comportement de l'étage d'attaque de ligne (1), un signal produit par les autres moyens formant circuit (19) et correspondant au signal d'émission de l'étage d'attaque de ligne (1) étant envoyé à au moins un filtre passe-bas des deuxièmes moyens formant circuit en tant que signal d'entrée.

27. Montage selon la revendication 26,
**caractérisé en ce que** l'étage d'attaque de ligne (1) est un étage d'attaque de ligne (1) fonctionnant selon le principe d'une source de courant.

28. Montage selon la revendication 26 ou 27, **caractérisé en ce**
**que** les autres moyens formant circuit (19), qui sont conçus pour simuler le comportement de l'étage d'attaque de ligne (1), sont couplés aux premiers moyens formant circuit (8) qui sont conçus de manière à simuler le comportement de la section de transmission (17), et qu'un signal prélevé entre les autres moyens formant circuit (16) et les premiers moyens formant circuit (8), est envoyés en tant que signal d'entrée à au moins un filtre passe-bas (3, 4) des deuxièmes moyens formant circuit.

29. Montage selon l'une des revendications 26 à 28, **caractérisé en ce**
**que** le dispositif de communication comprend un composant passif (R7) branché entre l'étage d'attaque de ligne (1) et le transformateur (13),
le signal à corriger, qui comprend la composante du signal de réception et la composante du signal d'émission, étant prélevé entre l'étage d'attaque de ligne (1) et le composant passif (R7) et étant envoyé aux troisièmes moyens formant circuit (2).

30. Montage selon la revendication 29, **caractérisé en ce que** les premiers moyens formant circuit comprennent une première section de circuit (R8) qui est conçue pour simuler le comportement du composant passif (R7), et une seconde section de circuit (8) couplé à la première section de circuit (R8) pour simuler le comportement de la section de transmission (17), un signal prélevé entre les autres moyens formant circuit (19) et la première section de circuit (R8) des premiers moyens formant circuit est envoyé à au moins un filtre passe-bas (3, 4) des deuxièmes moyens formant circuit.

31. Montage selon la revendication 30,
**caractérisé en ce que** le signal de sortie du au moins un filtre passe-bas (3, 4) des deuxièmes moyens formant circuit est le signal prélevé entre les autres moyens formant circuit (19) et la première section de circuit (R8) des premiers moyens formant circuit est envoyée aux troisièmes moyens formant circuit (2),
dans lequel les troisièmes moyens formant circuit (2) sont agencés de telle sorte qu'ils ajoutent au signal devant être corrigé, qui comprend la composante de signal de réception et la composante de signal d'émission, le signal de sortie du au moins un filtre passe-bas (3, 4) aux seconds moyens formant circuit et qu'à partir du signal est soustrait le signal prélevé entre les autres moyens formant circuit (19) et la première section de circuit (8) des premiers moyens formant circuit, pour obtenir la composante de signal de réception avec la composante de signal d'émission supprimée.

32. Montage selon la revendication 30 ou 31,
**caractérisé en ce**
**que** la seconde section de circuit (8) des premiers moyens formant circuit comprend un réseau passif, qui est conçu pour simuler le comportement de la section de transmission (17) .

33. Montage selon la revendication 32, **caractérisé en ce que** la seconde section de circuit (8) des premiers moyens formant circuit comprend un réseau RC passif, qui est conçu pour simuler le comportement de la section de transmission (17).

34. Montage selon l'une des revendications 30 à 33, **caractérisé en ce**
**que** la première section de circuit des premiers moyens de circuit comprend une résistance (R8) qui est conçue pour simuler le comportement du composant passif agencé en tant que résistance (R7).

35. Montage selon l'une des revendications 30 à 34, **caractérisé en ce que** la première section de circuit (R8), qui est conçue de manière à simuler le comportement du composant passif (R7) est intégrée dans la seconde section de circuit (8), qui est conçue pour simuler le comportement de la section de transmission (17).
